# EUROPÄISCHE PATENTSCHRIFT

(11) **EP 1 489 726 B1**
(45) Veröffentlichungstag und Bekanntmachung des Hinweises auf die Patenterteilung: **01.04.2015**
(21) Anmeldenummer: 04102715.2
(22) Anmeldetag: 15.06.2004
(51) Int. Cl.: H02K 5/24

(54) **Horizontalachsige elektrische Maschine**
Electric machine with a horizontal axis
Machine électrique à axe horizontal

(30) Priorität: 17.06.2003 DE 10327508
(43) Veröffentlichungstag der Anmeldung: 22.12.2004
(73) Patentinhaber: ALSTOM Technology Ltd, 5400 Baden (CH)
(72) Erfinder: Fried, Not-Curdin, 5212, Hausen b. Brugg (CH); Hediger, Daniel, 5504, Othmarsingen (CH); Merlini, Nicola, 6648, Minusio (CH); Meylan, René, 1400, Yverdon-les-Bains (CH); Stallone, Francesco, 6600, Locarno (CH)

(56) Entgegenhaltungen:
- EP-A- 1 083 647
- DE-A1- 3 920 785
- GB-A- 540 573

## Beschreibung

### TECHNISCHES GEBIET

Die vorliegende Erfindung bezieht sich auf das Gebiet der elektrischen Maschinen. Sie betrifft eine horizontalachsige elektrische Maschine gemäss dem Oberbegriff des Anspruchs 1.

### STAND DER TECHNIK

Eine solche Maschine ist z.B. aus der DE-A1 -43 22 268 und EP 1083647 bekannt.

Es ist seit langem bekannt, den Statorblechkörper einer grösseren horizontalachsigen elektrischen Maschine in einer Mehrzahl von in Achsenrichtung hintereinander angeordneten und voneinander beabstandeten Tragringen zu lagern, die jeweils an zwei gegenüberliegenden Seiten mittels einer Tragstruktur am darunterliegenden Grundrahmen oder Boden befestigt sind. Eine Maschine mit einem derartigen konstruktiven Aufbau ist z.B. aus der CH-A5-665 507 bekannt. Sie zeichnet sich dadurch aus, dass auftretende Schwingungen und thermische Spannungen während des Betriebes klein gehalten werden. Die bekannte Befestigung des Statorblechkörpers erlaubt eine einfache Montage, eine leichte Zugänglichkeit der zu verschweissenden Konstruktionsteile und gewährleistet eine gute Qualität der Schweissnähte.

Bei sehr grossen luftgekühlten Turbogeneratoren werden die doppeltfrequenten Blechkörperschwingungen und die daraus resultierenden Schallemissionen sehr gross. Mit zunehmender Maschinengrösse erhöhen sich aber auch die Beanspruchungen der Bauteile und Schweissnähte in den Verbindungsstellen zum Gehäuse. Aus den Blechkörperschwingungen und thermischen Wechselbeanspruchungen kann eine Materialermüdung mit Rissbildung resultieren. Es ist deshalb in der eingangs genannten Druckschrift DE-A1-43 22 268 vorgeschlagen worden, den Statorblechkörper bzw. Einbaustator mit seinen Tragringen auf einfache Weise in horizontaler Richtung federnd am Grundrahmen bzw. Gehäuse zu befestigen. Dies wird erreicht durch den Einbau von Blattfedern in die seitlich angeordneten Tragstrukturen der Tragringe. Die senkrecht stehenden Blattfedern sind an beiden Enden mit den Tragringen verschweisst. Im frei verbiegbaren Mittelbereich sind die Blattfedern über mehrere übereinander angeordnete Rohrstücke mit dem Gehäuse verschweisst. Hierdurch wird bei hoher Festigkeit in Umfangsrichtung das Gehäuse schwingungstechnisch und akustisch vom Statorblechkörper entkoppelt, sofern die Schwingungsamplituden in einer horizontalen Ebene liegen.

Nachteilig ist bei der bekannten Art der Lagerung des Einbaustators jedoch, dass bei anderen Schwingungsarten des Einbaustators, bei denen vertikale Komponenten auftreten, eine Entkopplung nur in begrenztem Umfang erfolgt.

### DARSTELLUNG DER ERFINDUNG

Es ist daher Aufgabe der Erfindung, eine horizontalachsige elektrische Maschine so auszubilden, dass sich eine verbesserte schwingungsmässige Entkopplung zwischen dem Einbaustator und dem Grundrahmen ergibt.

Die Aufgabe wird durch die Gesamtheit der Merkmale des Anspruchs 1 gelöst. Der Kern der Erfindung besteht darin, zwischen den Enden der Feder und dem zugehörigen Tragring in vertikaler Richtung wirkende Federelemente vorzusehen. Durch die in vertikaler Richtung wirkenden zusätzlichen Federelemente werden auch kompliziertere Schwingungen sicher entkoppelt. Durch die kompakte Anordnung der Feder und der Federelemente innerhalb der Tragstrukturen ist eine einfache Abstimmung bzw. Verstimmung der Federcharakteristiken möglich.

Eine erste bevorzugte Ausgestaltung der Erfindung ist dadurch gekennzeichnet, dass die Verbindungselemente jeweils ein senkrecht auf dem Grundrahmen stehendes U-förmiges Tragelement und ein horizontal zwischen der Feder und dem Tragelement sich erstreckendes Rohrstück umfassen, und dass das Rohrstück ein Rechteckrohr ist.

Eine Weiterbildung dieser Ausgestaltung zeichnet sich dadurch aus, dass das Rohrstück bzw. Rechteckrohr mit der Feder und dem Tragelement verschweisst ist, und dass Tragelement mit dem Grundrahmen verschweisst ist.

Eine zweite bevorzugte Ausgestaltung der Erfindung ist dadurch gekennzeichnet, dass der Tragring, die Federelemente und die Feder miteinander verschweisst si nd.

Eine weitere vorteilhafte Ausgestaltung der erfindungsgemässen Maschine zeichnet sich dadurch aus, dass die Federelemente sich horizontal zwischen der Feder und dem zugehörigen Tragring erstrecken und den Tragring beidseitig umgreifen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt den Längsschnitt durch eine federnde Befestigung eines Tragringes am Grundrahmen gemäss einem bevorzugten Ausführungsbeispiel der Erfindung;
- Fig. 2: den Querschnitt durch die Befestigung aus Fig. 1; und
- Fig. 3: in einem Ausschnitt die perspektivische Seitenansicht einer Maschine mit der Befestigung aus Fig. 1, wobei an verschiedenen Tragringen unterschiedliche Montageschritte bei der Tragstruktur 19, 20 und 21 dargestellt sind.

### WEGE ZUR AUSFÜHRUNG DER ERFINDUNG

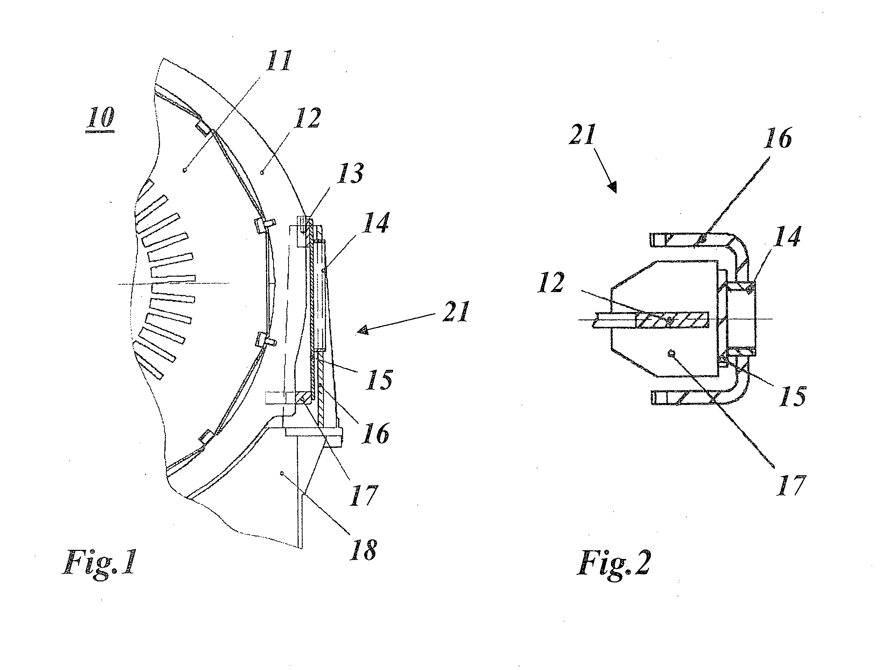

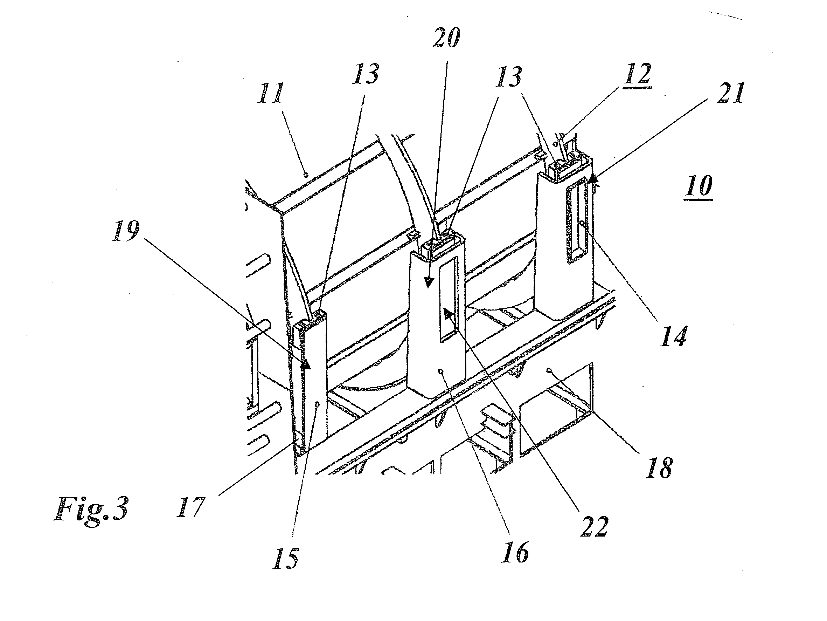

In Fig. 1 ist ein Ausschnitt einer horizontalachsigen elektrischen Maschine 10 gemäss einem bevorzugten Ausführungsbeispiel der Erfindung wiedergegeben, der die federnde Befestigung des Einbaustators 11 der Maschine 10 an einem darunterliegenden Grundrahmen 18 zeigt. Der Einbaustator 11 mit seinem Statorblechpaket ist in einer Mehrzahl von in Achsrichtung hintereinander angeordneten Tragringen 12 gelagert (siehe auch Fig. 3), die ihrerseits an gegenüberliegenden Seiten mittels einzelner vertikaler Tragstrukturen 21 (19, 20, 21 in Fig. 3) am Grundrahmen 18 befestigt sind. Der interne Aufbau der Tragstrukturen 19, 20, 21 ist in Fig. 1 im Längsschnitt, in Fig. 2 im Querschnitt, und in Fig. 3 in unterschiedlichen Montageschritten (19 -> 20 -> 21) dargestellt.

Innerhalb der Tragstruktur 21 (Fig. 1, 2) ist eine senkrecht stehende Feder 15 in Form einer länglichen rechteckigen Platte an beiden Enden mit dem zugehörigen Tragring 12 fest verbunden (siehe Tragstruktur 19 in Fig. 3). Die Verbindung erfolgt über ein oberes Federelement 13 und ein unteres Federelement 17. Die Federelemente 13, 17 sind horizontal liegende Platten, die den Tragring 12 auf beiden Seiten umgreifen (siehe Fig. 2). Sie sind einerseits mit dem Tragring 12 und an ihrer äusseren Stirnseite mit der Feder 15 verschweisst. Auf der Aussenseite der Feder 15 ist ein Rohrstück in Form eines Rechteckrohres 14 angeschweisst, das einen länglichen Rechteckquerschnitt hat. Die Rohrachse des Rechteckrohres 14 steht dabei senkrecht auf der Fläche der Feder 15. Ein Tragelement 16 mit U-förmigem Querschnittsprofil ist senkrecht stehend derart auf den horizontalen Grundrahmen 18 festgeschweisst, dass das Tragelement 16 die Feder 15 an drei Seiten umschliesst und die den Boden des U-Profils bildende Bodenplatte des Tragelementes 16 mit Abstand parallel zur Feder 15 liegt. In dieser Bodenplatte ist eine rechteckige Aussparung 22 vorgesehen, die den Aussenabmessungen des Rechteckrohrs 14 angepasst ist (siehe Tragstruktur 20 in Fig. 3). Im fertig montierten Zustand der Tragstruktur (Tragstruktur 21 in Fig. 3) ragt das Rechteckrohr 14 durch die Aussparung 22 und ist mit der Bodenplatte verschweisst. Anstelle des Rechteckrohres 14 kann die Verbindung zwischen Feder 15 und Bodenplatte des Tragelementes 16 auch über mehrere runde Rohrstücke oder durch eine vertikal stehende massive Stahlplatte erfolgen, wie dies in ähnlicher Weise in der eingangs genannten Druckschrift DE-A1 -43 22 268 gezeigt ist.

In dem in Fig. 1 bis 3 dargestellten Ausführungsbeispiel liegt die Feder 15 unsymmetrisch zu einer durch die Maschinenachse gehenden horizontalen Mittelebene, d.h., der überwiegenden Längeanteil der Feder 15 befindet sich unterhalb der Mittelebene. Dies hat zur Folge, dass die beiden Federelemente 13 und 17 unterschiedlich lang und dick ausgebildet sind. Es ist aber auch denkbar, die Feder 15 symmetrisch zur Mittelebene liegt. In diesem Fall sind die Federelemente weitgehend gleich.

Mit der erfindungsgemässen Lösung ergeben sich die folgenden Vorteile und charakteristischen Merkmale:
- Die Kombination aus Tragring 12 mit Feder 15 und U-förmigem Tragelement 16 bewirkt eine Entkopplung zwischen dem Einbaustator 11 und dem Grundrahmen 18 in horizontaler Richtung.
- Die horizontal angeordneten Federelemente 13, 17 bewirken eine vertikale Entkopplung zwischen Einbaustator 11 und Grundrahmen 18.
- Die Verbindung zwischen dem Tragelement 16 und dem Tragring mit Feder mittels des Rechteckrohres 14 gewährleistet eine steife Verbindung.
- Die Vertikalsteifigkeit wird durch die horizontal liegenden Federelemente 13, 17 beeinflusst.
- Die doppelte Federung durch die Feder 15 und die Federelemente 13, 17 ergibt eine verbesserte Entkopplung der Vier-Knoten-Schwingungen des Einbaustators 11 vom Grundrahmen 18.
- Es ist eine einfache Verstimmung (Abstimmung) der Federcharakteristik möglich.
- Es ist auch denkbar, anstelle der Schweissverbindungen Schraubverbindungen oder dgl. einzusetzen.

### BEZUGSZEICHENLISTE

- 10: elektrische Maschine (horizontalachsig)
- 11: Einbaustator
- 12: Tragring (mit Feder)
- 13,17: Federelement
- 14: Rechteckrohr (Rohrstück)
- 15: Feder
- 16: Tragelement (U-förmig)
- 18: Grundrahmen
- 19,20,21: Tragstruktur
- 22: Aussparung (rechteckig)

## Patentansprüche

1. Horizontalachsige elektrische Maschine (10) mit einem Einbaustator (11), welcher von einer Mehrzahl von parallelen, in axialer Richtung voneinander beabstandeten Tragringen (12) konzentrisch umgeben ist, die an ihrem Aussenumfang auf gegenüberliegenden Seiten jeweils mittels Tragstrukturen (19, 20, 21) mit einem sich in Achsrichtung erstreckenden Grundrahmen (18) verbunden sind, wobei innerhalb der Tragstrukturen (19, 20, 21) jeweils eine in horizontaler Richtung wirkende Feder (15) vorgesehen ist, welche die Form einer senkrecht stehenden länglichen Platte aufweist, die einerseits mit ihren Enden am zugehörigen Tragring (12) befestigt ist, und die andererseits mit ihrem frei durchbiegbaren Mittelteil über Verbindungselemente (14, 16) mit dem Grundrahmen (18) fest verbunden ist, **dadurch gekennzeichnet, dass** zwischen den Enden der Feder (15) und dem zugehörigen Tragring (12) in vertikaler Richtung wirkende Federelemente (13, 17) angeordnet sind.

2. Maschine nach Anspruch 1, **dadurch gekennzeichnet, dass** die Verbindungselemente (14, 16) jeweils ein senkrecht auf dem Grundrahmen (18) stehendes U-förmiges Tragelement (16) und ein horizontal zwischen der Feder (15) und dem Tragelement (16) sich erstreckendes Rohrstück (14) umfassen.

3. Maschine nach Anspruch 2, **dadurch gekennzeichnet, dass** das Rohrstück ein Rechteckrohr (14) ist.

4. Maschine nach Anspruch 1, **dadurch gekennzeichnet, dass** der Tragring (12), die Federelemente (13, 17) und die Feder (15) miteinander verschweisst sind.

5. Maschine nach einem der Ansprüche 2 oder 3, **dadurch gekennzeichnet, dass** das Rohrstück bzw. Rechteckrohr (14) mit der Feder (15) und dem Tragelement (16) verschweisst ist.

6. Maschine nach Anspruch 5, **dadurch gekennzeichnet, dass** Tragelement (16) mit dem Grundrahmen (18) verschweisst ist.

7. Maschine nach einem der Ansprüche 1 bis 6, **dadurch gekennzeichnet, dass** die Federelemente (13, 17) sich horizontal zwischen der Feder (15) und dem zugehörigen Tragring (12) erstrecken und den Tragring (12) beidseitig umgreifen.

## Claims

1. Horizontal-axis electrical machine (10) having an built-in stator (11), which is concentrically surrounded by a number of parallel retaining rings (12) which are spaced apart from one another in the axial direction and are connected on their outer circumference on opposing sides in each case by means of retaining structures (19, 20, 21) to a base frame (18) which extends in the axial direction, a horizontally acting spring (15), which has the form of a perpendicular, longitudinal plate, is fixed on the one hand with its ends to the associated retaining ring (12), and is firmly connected on the other hand with its freely flexible central part to the base frame (18) by means of connecting elements (14, 16), being provided within each of the retaining structures (19, 20, 21), **characterized in that** vertically acting spring elements (13, 17) are arranged between the ends of the spring (15) and the associated retaining ring (12).

2. Machine according to Claim 1, **characterized in that** the connecting elements (14, 16) each comprise a U-shaped retaining element (16), which is positioned at right angles on the base frame (18), and a tubular piece (14), which extends horizontally between the spring (15) and the retaining element (16).

3. Machine according to Claim 2, **characterized in that** the tubular piece is a rectangular tube (14).

4. Machine according to Claim 1, **characterized in that** the retaining ring (12), the spring elements (13, 17) and the spring (15) are welded to one another.

5. Machine according to one of Claims 2 or 3, **characterized in that** the tubular piece or rectangular tube (14) is welded to the spring (15) and the retaining element (16).

6. Machine according to Claim 5, **characterized in that** the retaining element (16) is welded to the base frame (18).

7. Machine according to one of Claims 1 to 6, **characterized in that** the spring elements (13, 17) extend horizontally between the spring (15) and the associated retaining ring (12) and engage around the retaining ring (12) on both sides.

## Revendications

1. Machine électrique à axe horizontal (10) comprenant un stator incorporé (11) qui est entouré concentriquement par une pluralité de bagues de support parallèles (12) espacées les unes des autres dans la direction axiale, qui sont connectées au niveau de leur périphérie extérieure sur des côtés opposés à chaque fois au moyen de structures de support (19, 20, 21) à un châssis de base (18) s'étendant dans la direction axiale, un ressort (15) agissant dans la direction horizontale étant à chaque fois prévu à l'intérieur des structures de support (19, 20, 21), lequel présente la forme d'une plaque allongée disposée verticalement qui d'une part est fixée avec ses extrémités à la bague de support associée (12) et qui d'autre part est connectée fixement avec sa partie centrale librement flexible par le biais d'éléments de connexion (14, 16) au châssis de base (18), **caractérisée en ce qu'**entre les extrémités du ressort (15) et la bague de support associée (12) sont disposés des éléments de ressort (13, 17) agissant dans la direction verticale.

2. Machine selon la revendication 1, **caractérisée en ce que** les éléments de connexion (14, 16) comprennent à chaque fois un élément de support (16) en forme de U disposé verticalement sur le châssis de base (18) et une pièce tubulaire (14) s'étendant horizontalement entre le ressort (15) et l'élément de support (16).

3. Machine selon la revendication 2, **caractérisée en ce que** la pièce tubulaire est un tube rectangulaire (14).

4. Machine selon la revendication 1, **caractérisée en ce que** la bague de support (12), les éléments de ressort (13, 17) et le ressort (15) sont soudés les uns aux autres.

5. Machine selon l'une quelconque des revendications 2 ou 3, **caractérisée en ce que** la pièce tubulaire ou le tube rectangulaire (14) est soudé(e) au ressort (15) et à l'élément de support (16).

6. Machine selon la revendication 5, **caractérisée en ce que** l'élément de support (16) est soudé au châssis de base (18).

7. Machine selon l'une quelconque des revendications 1 à 6, **caractérisée en ce que** les éléments de ressort (13, 17) s'étendent horizontalement entre le ressort (15) et la bague de support associée (12) et viennent en prise des deux côtés autour de la bague de support (12).
